# EUROPÄISCHE PATENTSCHRIFT

(11) **EP 1 588 470 B1**
(45) Veröffentlichungstag und Bekanntmachung des Hinweises auf die Patenterteilung: **24.08.2011**
(21) Anmeldenummer: 03773510.7
(22) Anmeldetag: 13.10.2003
(51) Int. Cl.: H02K 1/27, H02K 21/16, H02K 29/03

(54) **ELEKTRISCHE MASCHINE MIT PERMANENTMAGNET**
ELECTRICAL MACHINE HAVING A PERMANENT MAGNET
MACHINE ELECTRIQUE A AIMANT PERMANENT

(30) Priorität: 22.01.2003 DE 10302164
(43) Veröffentlichungstag der Anmeldung: 26.10.2005
(73) Patentinhaber: ROBERT BOSCH GMBH, 70442 Stuttgart (DE)
(72) Erfinder: WEHRLE, Andreas, 77652 Offenburg (DE)
(86) Internationale Anmeldenummer: PCT/DE2003/003391
(87) Internationale Veröffentlichungsnummer: WO 2004/070917

(56) Entgegenhaltungen:
- JP-A- 2001 178 042
- US-A- 4 748 359
- US-A- 5 345 130
- PATENT ABSTRACTS OF JAPAN Bd. 1997, Nr. 06, 30. Juni 1997 (1997-06-30) -& JP 09 056092 A (FUJI ELECTRIC CO LTD), 25. Februar 1997 (1997-02-25)
- PATENT ABSTRACTS OF JAPAN Bd. 1995, Nr. 11, 26. Dezember 1995 (1995-12-26) -& JP 07 222385 A (FUJI ELECTRIC CO LTD), 18. August 1995 (1995-08-18)

## Beschreibung

### Stand der Technik

Die vorliegende Erfindung betrifft eine elektrische Maschine wie beispielsweise ein Elektromotor oder ein Generator mit einem Rotor, einem Stator und einem Permanentmagneten.

Derartige elektrische Maschinen sind aus dem Stand der Technik wohl bekannt. Dabei sind beispielsweise Elektromotoren bekannt, bei denen die Permanentmagnete entweder am Stator oder am Rotor angebracht sind. Üblicherweise werden die Permanentmagnete dabei mittels Kleben mit dem Rotor bzw. dem Stator verbunden, wie dies beispielsweise in den Schriften JP-09056092 und JP-2001178042 beschrieben ist. Bei derartigen elektrischen Maschinen wird der Einfluss auf die Momentenwelligkeit durch einen zwischen Rotor und Stator vorhandenen Luftspalt beeinflusst Je größer hierbei der Luftspalt ist, desto größer sind die magnetischen Verluste, die sich auf die Drehmomentübertragung negativ auswirken. Um ein kleines Rastmoment bzw. eine geringe Momentwelligkeit zu erreichen, muss somit der Luftspalt der Permanentmagnete in Umfangrichtung zur Außenseite des Pols hin größer werden. Je nach Art der Anwendung gibt es nun Anwendungen, bei denen ein hohes Rastmoment wie z.B. im Stellmotorenbereich für eine Drosselklappe usw. notwendig ist und es gibt Anwendungen, bei denen eine geringe Momentenwellig, wie z.B. im Lenkungsbereich, notwendig ist Aufgrund der dadurch notwendigen technischen Massnahmen wird jedoch die Dicke des Luftspalts zwischen Stator und Rotor im Bereich der Pole vorzugsweise symmetrisch verändert, was zu den oben erläuterten Verlusten bei der Drehmomentübertragung führt

Mit der JP 6 261 476 ist ein Rotor für eine elektrische Maschine bekannt geworden, bei der ein ringförmiger Permanentmagnet auf einem Rotor befestigt ist. Dazu sind mehrere einzelne Federstreifen federnd zwischen dem Rotorkörper und dem Ringmagnet angeordnet.

### Vorteile der Erfindung

Die erfindungsgemäße elektrische Maschine mit den Merkmalen des Anspruchs 1 hat den Vorteil, dass der Luftspalt zwischen, dem Rotor und dem Stator über die gesamte axiale Länge konstant bleibt. Trotzdem kann erfindungsgemäß das Rastmoment bzw. die Momentenwelligkeit der elektrischen Maschine geändert werden. Ein weiterer Vorteil des konstanten Luftspalts zwischen Stator und Rotor ist, dass auf den Magnotsplitterschutz verzichtet werden kann. Hierzu ist das permanentmagnetische Element derart ausgebildet, dass seine zum Luftspalt gerichtete Mantelfläche eine Zylinderform aufweist. Dadurch ist es auf einfache Weise möglich, die Breite des Luftspalts konstant zu halten, wenn das an der anderen Seite des Luftspalts angeordnete Bauteil ebenfalls eine zylinderförmige Mantelfläche aufweist. Weiterhin weist das permanentmagnetische Element an seiner zum Luftspalt abgewandten Seite eine nicht-zylinderförmige Mantelfläche auf. Mittels dieser nicht-zylindrischen Mantelfläche kann je nach geometrischer Ausgestaltung ein kleines bzw. ein hohes Rastmoment und/oder eine geringe bzw. eine hohe Momentenwelligkeit erhalten werden. Je nach Anwendungsfall kann das permanentmagnetische Element dabei am Rotor oder am Stator angeordnet sein. Bei einer Anordnung am Rotor ist somit die innere Umfangsfläche des permanentmagnetischen Elements mit einer von einem Zylinder abweichenden Gestalt ausgebildet Bei einer Anordnung am Stator ist die äußere Umfangsfläche des permanentmagnetischen Elements mit einer nicht-zylindrischen Gestalt ausgebildet. Erfindungsgemäß ist das permanentmagnetische Element mittels eines Federelements federnd am Stator bzw. Rotor gelagert Dadurch kann die beim bisher üblichen Verkleben zwischen Magnet und Stator bzw. Rotor auftretenden Nachteile aufgrund unterschiedlicher Temperaturausdehnungen der einzelnen Bauteile bzw. der Klebstoffzwischenschicht eliminiert werden, da das Federelement die Ausgleichsfunktion übernimmt, ohne dass Risse o.ä. in den Bauteilen entstehen.

Die Unteransprüche zeigen vorteilhafte Weiterbildungen der Erfindung.

Gemäß einer bevorzugten Ausgestaltung der vorliegenden Erfindung ändert sich eine Dicke des permanentmagnetischen Elements an der zum Luftspalt abgewandten Seite kontinuierlich. Gemäß einer anderen bevorzugten Ausgestaltung der Erfindung ändert sich die Dicke des permanentmagnetischen Elements sprunghaft Dies kann beispielsweise durch das Vorsehen von im Schnitt U-förmigen, kanalförmigen Aussparungen realisiert werden.

Vorzugsweise ist das permanentmagnetische Element derart aufgebaut, dass es in Axialrichtung einen mittleren Bereich mit einer konstanten Dicke und jeweilige Endbereiche mit nicht-zylindrischer Gestalt an der vom Luftspalt abgewandten Seite aufweist. Somit ist das Magnetflussverhalten des permanentmagnetischen Elements über die Axialrichtung unterschiedlich, sodass die elektrische Maschine für verschiedenste Anforderungen ausgebildet werden kann.

Besonders bevorzugt sind die verringerten Dicken am permanentmagnetische Element ungefähr in der Mitte der gleichpoligen Bereiche angeordnet. Durch eine derartige Anordnung kann eine elektrische Maschine mit einem hohen Rastmoment bzw. einer hohen Momentenwelligkeit bereitgestellt werden. Besonders bevorzugt ist diese Verjüngung in der Mitte des gleichpoligen Bereichs symmetrisch ausgebildet. Dadurch kann ein gleiches

Momentenverhalten für linkslaufende und rechtslaufende elektrische Maschinen erhalten werden.

Um ein geringes Rastmoment bzw. eine geringe Momentenwelligkeit zu erhalten, sind die an der vom Luftspalt abgewandten Seite des Permanentmagneten vorgenommenen Dickenreduzierungen am Übergang zwischen zwei Polbereichen ausgebildet. Besonders bevorzugt sind die Dickenreduzierungen für ein gleiches Momentenverhalten beim Links- bzw. Rechtslauf symmetrisch ausgebildet.

Besonders bevorzugt ist das Federelement dabei in im permanentmagnetischen Element gebildeten Aussparungen, welche die Momentenwelligkeit bzw. das Rastmoment beeinflussen, angeordnet

### Zeichnungen

Die Erfindung ist anhand von in der Zeichnung dargestellten bevorzugten Ausführungsbeispielen in der nachfolgenden Beschreibung näher erläutert. Es zeigen:
- Fig. 1: einen Längsschnitt einer elektrischen Maschine gemäß einem Ausführungsbeispiel der vorliegenden Erfindung
- Figur 2: eine schematische Querschnittsansicht der in Figur 1 gezeigten elektrischen Maschine,
- Figur 3: eine vergrößerte Detailansicht von Figur 2,
- Figur 4: eine schematische Querschnittsansicht einer elektrischen Maschine gemäß einem Beispiel,
- Figur 5: eine vergrößerte Teilansicht von Figur 4, und
- Figur 6: eine schematische Querschnittsansicht einer elektrischen Maschine gemäß einem weiteren Beispiel.

### Beschreibung der Ausführungsbeispiele

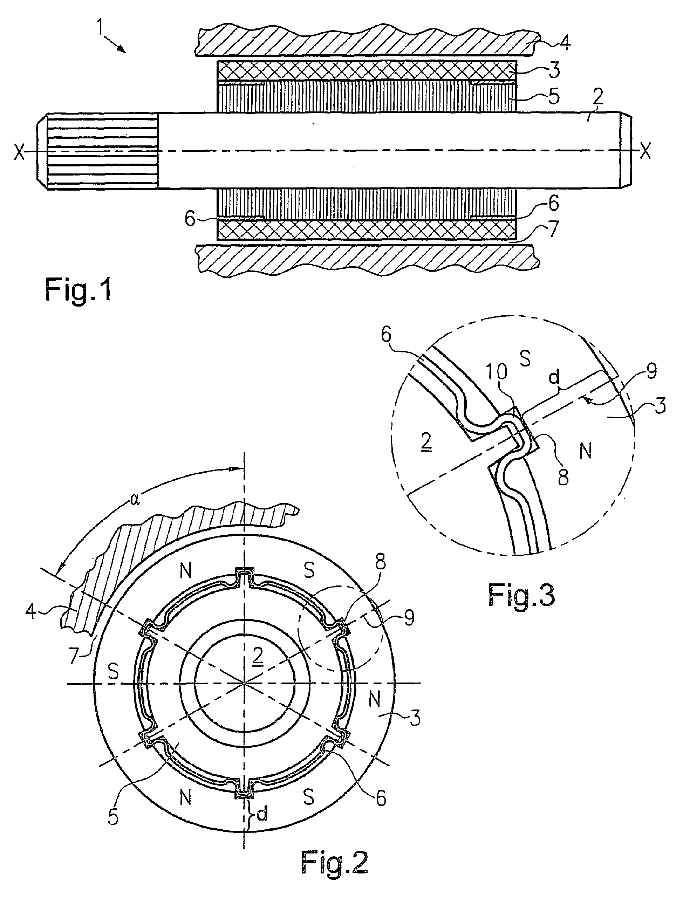

In den Figuren 1 bis 3 ist eine elektrische Maschine 1 gemäß einem Ausführungsbeispiel der vorliegenden Erfindung dargestellt. Die elektrische Maschine 1 umfasst einen Stator 4 und einen Rotor 2, an dem ein geblechtes Rotorlamellenpaket 5 sowie ein permanentmagnetisches Element 3 angeordnet ist. Das permanentmagnetische Element 3 besteht aus einem sechspoligen Ringmagnet mit einem Phasenwinkel α von 60°. Der Ringmagnet ist kostengünstig mittels Sintern hergestellt. Ein Luftspalt 7, welcher zwischen dem permanentmagnetischen Element 3 und dem Stator 4 angeordnet ist, ist sowohl in Axialrichtung X-X der elektrischen Maschine 1 als auch in Umfangsrichtung konstant. Dies wird dadurch ermöglicht, dass die äußere Mantelfläche des permanentmagnetischen Elements 3 als Zylinder ausgebildet ist. Ebenfalls ist die innere Mantelfläche des Stators 4 als Zylinder ausgebildet, sodass der Luftspalt 7 umlaufend über den gesamten Rotor eine konstante Breite aufweist.

Wie insbesondere aus den Figuren 2 und 3 ersichtlich ist, ist das permanentmagnetische Element 3 mittels einer Feder 6 mit dem Rotorlamellenpaket 5 und somit mit dem Rotor 2 verbunden. Die Feder 6 ist eine ringförmige Feder und weist federnde Eigenschaften sowohl in radialer Richtung als auch in Umfangs- und Axialrichtung des Rotors auf. Hierzu weist die Feder 6 vorstehende Bereiche 10 auf, welche in am inneren Umfang des Ringmagneten gebildeten Aussparungen 8 befestigt sind. Wie aus den Figuren 2 und 3 ersichtlich ist, sind die Aussparungen 8 jeweils an Übergangsbereichen 9 zwischen benachbarten Polen des Ringmagneten angeordnet. Die Aussparungen 8 sind dabei im Wesentlichen U-förmig und können zum besseren Halten der Feder 6 eine Hinterschneidung aufweisen. Weiterhin sind die Aussparungen 8 zum Polübergangsbereich 9 symmetrisch ausgebildet.

Durch das Vorsehen der Aussparungen 8 weist der Ringmagnet 3 an der zum Luftspalt 7 abgewandten Seite eine nicht-zylindrische Gestalt auf. Somit weist das permanentmagnetische Element 3 an vorbestimmten Positionen eine verringerte Dicke d auf. Dadurch kann in Abhängigkeit von der Größe und der geometrischen Ausbildung der Aussparung 8 ein Einfluss auf das Rastmoment bzw. die Momentenwelligkeit erhalten werden und trotzdem kann ein Luftspalt 7 mit konstanter Breite bereitgestellt werden. Dabei ist es einfach, einen Luftspalt mit geringster Breite auszubilden. Weiterhin wird mittels der Federn 6 eine radiale Zentrierung des permanentmagnetischen Elements 3 erreicht.

In dem in den Figuren 1 bis 3 gezeigten Ausführungsbeispiel ist die Aussparung 8 nicht über die gesamte axiale Länge des permanentmagnetischen Elements 3 ausgebildet, sondern nur an den jeweiligen Enden (vgl. Figur 1). Dadurch wird der magnetische Fluss nur in geringerem Umfang aufgrund der Aussparungen 8 beeinflusst. Es ist jedoch auch denkbar, dass die Aussparungen an der zum Luftspalt 7 abgewandten Seite am permanentmagnetischen Element über die gesamte Axiallänge des permanentmagnetischen Elements verlaufen. Weiterhin sei angemerkt, dass die Feder 6 nicht als vollständig geschlossener Ring ausgebildet sein muss, sondern dass es auch möglich ist, einen offenen Ring als Feder zu verwenden. Weiterhin ermöglicht das Federelement einen Ausgleich bei temperaturbedingten, unterschiedlichen Längenänderungen der einzelnen Rotorbauteile.

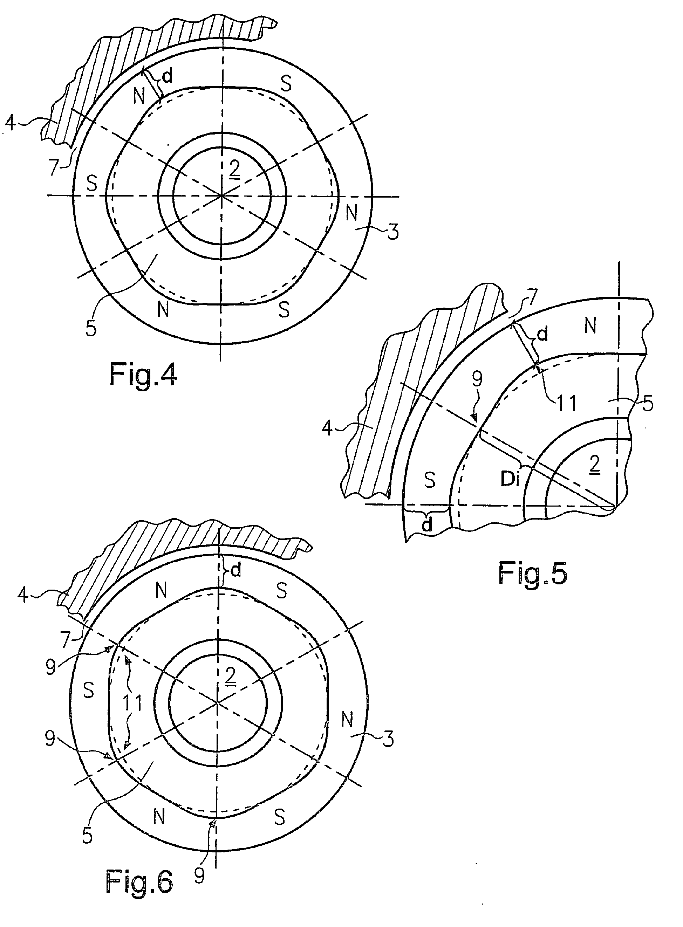

Nachfolgend wird unter Bezugnahme auf die Figuren 4 und 5 eine elektrische Maschine gemäß einem Beispiel beschrieben. Im Unterschied zum ersten Ausführungsbeispiel sind am permanentmagnetischen Element 3 des zweiten Ausführungsbeispiels an dessen vom Luftspalt 7 abgewandten Seite keine U-förmigen Aussparungen, sondern sich verjüngende Bereiche 11 ausgebildet. Wie genauer in Figur 5 ersichtlich ist, sind die sich verjüngenden Bereiche 11 in der Mitte jedes gleichpoligen Bereichs der Pole des Ringmagneten 3 ausgebildet. Somit weist das permanentmagnetische Element eine verringerte Dicke d in der Mitte gleichpoliger Bereiche N, S auf. Die Bereiche 11 - verjüngen sich dabei symmetrisch zur Mitte des jeweiligen gleichpoligen Bereichs, ausgehend von einem Innendurchmesser Dᵢ, welcher am Übergangsbereich 9 zwischen benachbarten Polen vorhanden ist (vgl. Figur 5, wobei der konstante Innendurchmesser Dᵢ gestrichelt angedeutet ist). Somit weist das permanentmagnetische Element 3 an seiner vom Luftspalt 7 abgewandten Seite eine nicht-zylindrische Gestalt auf, sodass einerseits ein Einfluss auf das Rastmoment bzw. die Momentenwelligkeit erhalten wird und andererseits geringe magnetische Verluste durch den gleichbleibenden und geringen Luftspalt 7 erhalten werden können.

Figur 6 zeigt eine elektrische Maschine gemäß einem weiteren Beispiel. Das Beispiel entspricht im Wesentlichen dem Beispiel der Figur 4, wobei jedoch im Unterschied zu diesern Beispiel die sich verjüngenden Bereiche 11 nicht in der Mitte des gleichpoligen Bereichs des Magneten, sondern am Übergangsbereich 9 zwischen benachbarten Magnetpolen N, S vorgesehen ist. Ansonsten entspricht dieses Beispiel dem Beispiel der Figur 4, sodass auf die dort gegebene Beschreibung verwiesen werden kann.

## Patentansprüche

1. Elektrische Maschine, umfassend einen Rotor (2), einen Stator (4) und ein permanentmagnetisches als Ringmagnet ausgebildetes Element (3), welches am Rotor (2) oder am Stator (4) befestigt ist, wobei das permanentmagnetische Element (3) einen Luftspalt (7) zwischen Rotor (2) und Stator (4) begrenzt, wobei die zum Luftspaft (7) gerichtete Mantelfläche des permanentmagnetischen Elements (3) eine Zylinderform aufweist, so dass der Luftspalt (7) eine konstante Breite aufweist und wobei das permanentmagnetische Element (3) an der zum Luftspalt (7) abgewandten Seite eine nicht-zylindrische Mantelfläche aufweist, so dass das permanentmagnetische Element (3) in Umfangsrichtung eine unterschiedliche Dicke aufweist, mit einer Feder (6), um das permanentmagnetische Element (3) federnd in am inneren Umfang des Ringmagneten gebildeten Aussparungen (8) zu befestigen, wobei die Aussparungen (8) im Schnitt im Wesentlichen u-förmig gebildet sind, **dadurch gekennzeichnet dass** die Feder (6) als vollständig geschlossener Ring oder als offener Ring ausgebildet ist und vorstehende Bereiche (10) aufweist, welche in den Aussparungen (8) befestigt sind.

2. Elektrische Maschine nach Anspruch 1, **dadurch gekennzeichnet, dass** eine Änderung der Dicke des permanentmagnetischen Elements (3) an der zum Luftspalt (7) abgewandten Seite sprunghaft erfolgt.

3. Elektrische Maschine nach einem der Ansprüche 1 bis 2, **dadurch gekennzeichnet, dass** das permanentmagnetische Element (3) eine verringerte Dicke (d) an Übergangsbereichen (9) zwischen benachbarten Polen aufweist.

4. Elektrische Maschine nach Anspruch 1 oder 3, **dadurch gekennzeichnet, dass** die verringerte Dicke (d) des permanentmagnetischen Elements (3) symmetrisch zur Mitte der gleichpoligen Bereiche bzw. zum Übergangsbereich (9) zwischen benachbarten Polen ausgebildet ist.

5. Elektrische Maschine nach einem der vorhergehenden Ansprüche, **dadurch gekennzeichnet, dass** das permanentmagnetische Element (3) an einem in Axialrichtung (X-X) liegenden mittleren Bereich eine konstante Dicke in Umfangsrichtung aufweist und jeweils an seinen in Axialrichtung (X-X) liegenden Enden eine nicht-konstante Dicke in Umfangsrichtung aufweist.

6. Elektrische Maschine nach einem der vorhergehenden Ansprüche, **dadurch gekennzeichnet, dass** das permanentmagnetische Element (3) aus einem sechspoligen Ringmagnet mit einem Phasenwinkel von 60° besteht.

7. Elektrische Maschine nach einem der vorhergehenden Ansprüche, **dadurch gekennzeichnet, dass** der Rotor (2) als ein geblechtes Rotorlamellenpaket (5) ausgebildet ist

8. Elektrische Maschine nach einem der vorhergehenden Ansprüche, **dadurch gekennzeichnet, dass** die Aussparung (8) nicht über die gesamte axiale Länge des permanentmagnetische Elements (3), sondern nur an dessen jeweiligen Enden ausgebildet ist.

9. Elektrische Maschine nach einem der vorhergehenden Ansprüche, **dadurch gekennzeichnet, dass** die Aussparungen (8) zum besseren Halten der Feder (6) eine Hinterschneidung aufweisen.

## Claims

1. Electrical machine comprising a rotor (2), a stator (4) and a permanent-magnet element (3) which is in the form of a ring magnet and is fixed to the rotor (2) or to the stator (4), with the permanent-magnet element (3) delimiting an air gap (7) between the rotor (2) and the stator (4), with the lateral surface of the permanent-magnet element (3) which is directed towards the air gap (7) having a cylindrical shape, so that the air gap (7) has a constant width, and with the permanent-magnet element (3) having a non-cylindrical lateral surface on that side which is averted from the air gap (7), so that the permanent-magnet element (3) has a different thickness in the circumferential direction, having a spring (6) in order to fix the permanent-magnet element (3) in cutouts (8), which are formed on the inner circumference of the ring magnet, in a sprung manner, with the cutouts (8) being of substantially u-shaped form in section, **characterized in that** the spring (6) is in the form of a completely closed ring or in the form of an open ring and has projecting regions (10) which are fixed in the cutouts (8).

2. Electrical machine according to Claim 1, **characterized in that** the thickness of the permanent-magnet element (3) changes abruptly on that side which is averted from the air gap (7).

3. Electrical machine according to either of Claims 1 and 2, **characterized in that** the permanent-magnet element (3) has a reduced thickness (d) in the transition regions (9) between adjacent poles.

4. Electrical machine according to Claim 1 or 3, **characterized in that** the reduced thickness (d) of the permanent-magnet element (3) is formed symmetrically relative to the centre of the regions of identical polarity or relative to the transition region (9) between adjacent poles.

5. Electrical machine according to one of the preceding claims, **characterized in that** the permanent-magnet element (3) has a constant thickness in the circumferential direction in a central region in the axial direction (X-X), and has a non-constant thickness in the circumferential direction at its ends in the axial direction (X-X).

6. Electrical machine according to one of the preceding claims, **characterized in that** the permanent-magnet element (3) comprises a six-pole ring magnet with a phase angle of 60°.

7. Electrical machine according to one of the preceding claims, **characterized in that** the rotor (2) is in the form of a laminated rotor core (5).

8. Electrical machine according to one of the preceding claims, **characterized in that** the cutout (8) is not formed over the entire axial length of the permanent-magnet element (3) but rather only at the respective ends of the said permanent-magnet element.

9. Electrical machine as claimed in one of the preceding claims, **characterized in that** the cutouts (8) have an undercut in order to hold the spring (6) better.

## Revendications

1. Machine électrique, comprenant un rotor (2), un stator (4) et un élément à aimant permanent (3) réalisé sous la forme d'un aimant annulaire et fixé au rotor (2) ou au stator (4), l'élément à aimant permanent (3) délimitant un entrefer (7) entre le rotor (2) et le stator (4), la surface d'enveloppe orientée vers l'entrefer (7) de l'élément à aimant permanent (3) présentant une forme cylindrique, de sorte que l'entrefer (7) présente une largeur constante et l'élément à aimant permanent (3) présentant au niveau du côté opposé à l'entrefer (7) une surface d'enveloppe non cylindrique, de sorte que l'élément à aimant permanent (3) présente dans la direction de sa périphérie une épaisseur différente, avec un ressort (6) pour fixer l'élément à aimant permanent (3) de façon élastique dans les évidements (8) formés au niveau de la périphérie intérieure de l'aimant permanent, les évidements (8) ayant un noyau prenant en coupe pour l'essentiel une forme en u, **caractérisée en ce que** le ressort (6) prend la forme d'un anneau entièrement fermé ou d'un anneau ouvert et présente des zones saillantes (10) fixées dans les évidements (8).

2. Machine électrique selon la revendication 1, **caractérisée en ce qu'**une modification de l'épaisseur de l'élément à aimant permanent (3) se produit de façon saccadée sur le côté opposé à l'entrefer (7).

3. Machine électrique selon l'une quelconque des revendications 1 à 2, **caractérisée en ce que** l'élément à aimant permanent (3) présente une épaisseur réduite (d) au niveau des zones de transition (9) situées entre les pôles connexes.

4. Machine électrique selon la revendication 1 ou 3, **caractérisée en ce que** l'épaisseur réduite (d) de l'élément à aimant permanent (3) est réalisé de façon symétrique au centre des zones de même polarité et/ou de la zone de transition (9) entre des pôles connexes.

5. Machine électrique selon l'une quelconque des revendications précédentes, **caractérisée en ce que** l'élément à aimant permanent (3) présente, au niveau d'une zone centrale reposant dans la direction axiale (X-X), une épaisseur constante dans la direction périphérique et présente respectivement, au niveau de ses extrémités situées dans la direction axiale (X-X), une épaisseur non constante dans la direction périphérique.

6. Machine électrique selon l'une quelconque des revendications précédentes, **caractérisée en ce que** l'élément à aimant permanent (3) se compose d'un aimant permanent à six pôles avec un angle de phase de 60°.

7. Machine électrique selon l'une quelconque des revendications précédentes, **caractérisée en ce que** le rotor (2) est réalisé sous la forme d'un paquet de lamelles de rotor (5) en tôle.

8. Machine électrique selon l'une quelconque des revendications précédentes, **caractérisée en ce que** l'évidement (8) n'est pas réalisé sur l'ensemble de la longueur axiale de l'élément à aimant permanent (3) mais seulement au niveau de ses extrémités respectives.

9. Machine électrique selon l'une quelconque des revendications précédentes, **caractérisée en ce que** les évidements (8) présentent un détouré arrière pour mieux tenir le ressort (6).
